# EUROPEAN PATENT SPECIFICATION

(11) **EP 1 456 067 B1**
(45) Date of publication and mention of the grant of the patent: **07.05.2008**
(21) Application number: 00975135.5
(22) Date of filing: 11.11.2000
(51) Int. Cl.: B60S 3/04, B08B 3/04

(54) **METHOD FOR CLEANING AND A VEHICLE CLEANING SYSTEM**
REINIGUNGSVERFAHREN UND REINIGUNGSVORRICHTUNG FÜR FAHRZEUGE
PROCEDE DE NETTOYAGE ET SYSTEME DE NETTOYAGE DE VEHICULE

(30) Priority: 11.11.1999 SE 9904092
(43) Date of publication of application: 15.09.2004
(73) Proprietor: ERIKSSON, Tord Georg, S-175 23 Järfälla (SE)
(72) Inventor: ERIKSSON, Tord Georg, S-175 23 Järfälla (SE)
(86) International application number: PCT/SE2000/002221
(87) International publication number: WO 2001/034443

(56) References cited:
- WO-A1-93/21045
- WO-A1-95/29877
- GB-A- 1 407 894
- US-A- 3 911 938
- US-A- 4 135 533
- US-A- 5 062 438
- US-A- 5 922 138

## Description

Discharge from the cleaning of vehicles and similar objects is an important environmental problem. A method for a partial solution of the problem is described in PCT/SE95/00477, where one uses a recycling wash solution, which is purified continuously by sedimentation and filtering after addition of a cleavage agent, consisting of soluble, not complexing salts with two or more anionic valences. The result can be reduction of the water consumption with more than 80% and reduction of discharges that are environmentally disturbing with more than 90%. The method has very high cost efficiency. The system may be designed to ensure that the corrosion resistance of the vehicles is bettered.

A similar way of approaching the problem is described in the American patent publication US 4,135,533. According to this publication three, separate circuits are used for pre-wetting, washing and rinsing. The only purification included in the system is coagulation, without chemical additions, and separation of solid impurities by hydro-cyclones and filtration. The system is designed for the washing of railroad cars and locomotives. The demands on such washing differ very much from the demands for washing of road vehicles, especially passenger cars. This concerns especially the moments rinsing and drying. Here the demand for motor cars and especially passenger cars is that the surface after drying must have high lustre and be completely free from haziness or drying spots.

Another variant of the same theme is described in GB 1 407 894, which refers to washing of motor cars. Here too, separate circuits are used for washing and rinsing. Both circuits include purification by oil separation with the aid of so-called skimmers. The washing circuit includes separation of solid impurities by a hydro-cyclone. The washing circuit includes filtration to eliminate impurities. Reverse osmosis (RO) is mentioned as a possibility for salt elimination wintertime, when road salt is part of the dirt. No description of how this could be used in a constructive way to eliminate salt spots at the drying can be found in the publication.

SE 501 044 describes a system, where one, without other purification measures than the sedimentation, which happens in the, for practical reasons, comparatively small intermediate tanks, reuses dirty water for the washing respectively rinsing. Thus, this invention refers to a counter-current system with several circuits without integrated purification.

At washing water losses occur caused by the fact that every washed vehicle leaves the wash with some water. Further the fine dispersion of water created by brushes and high-pressure guns gives good opportunities for evaporation and formation of air borne water aerosols. Part of the water vapour and the water aerosols leaves the wash room with the air in the ventilation system. Other parts are precipitated on machines, walls, ceiling and floor and returned to the circuit. A comprehensive common designation for the water losses is "withdraw".

The water losses fluctuate from car type to car type and depending on used wash techniques, time of the year and weather. A common estimate is in average 15 litres per vehicle. In closed systems for vehicle cleaning, the withdraw is used to keep the content of water-soluble impurities down. The water-soluble impurities are partly organic, partly inorganic. The latter ones are mainly salts. The impurities come only partially from the dirt. Other sources are tap water, which contains important quantity salt of different kinds. The salt concentration increases, when water is lost as water vapour. However, the main source is the counter ions accompanying the different agents used for defatting, cleaning and rinsing.

Experiences confirm that the withdraw is not sufficient for keeping the salt concentrations at an acceptable level in a system with total recycling of wash and rinse water. Now and then the systems must be emptied completely and the wash water replaced by fresh water to restore expected functions.

Even if one accepts periodic emptying, rinsing and drying are often problematic in systems with total recycling. Even common tap water contains enough salt to cause drying spots if conditions are unfavourable. This becomes especially embarrassing, when the rinsing is done with recycled water contaminated with salt from earlier stages of the process.

Another problem is that the withdraw varies considerably from vehicle to vehicle and is influenced by current weather conditions. A functioning recycling system without bleeding-off to the sewage disposal system must allow for all these factors.

According to the present invention those problems are solved by adding a separate balancing circuit to the two circuits for washing and rinsing mentioned in US 4,135,533 and GB 1 407 894. This balancing circuit returns contaminated water from an earlier stage in the process, with respect to the washing, to the rinse section, purifies the water as described below, and then reuses it for the final rinsing together with the freshwater addition allowed by the withdraw.

The wash process of the invention can be done on an immobile vehicle in one treatment station. This can be recommended for comparatively small new units and such rebuilding, where difficulties arise installing a separate hall for rinsing and drying.

For new construction of comparatively large plants a design is recommended that allows the vehicle to be moved, after the wash phase and before the rinse phase to a separate room, where rinsing and drying take place. The rooms should be separated so that earlier mentioned, air carried water aerosol cannot spread from the wash zone to the rinse zone.

Beside the variations mentioned with respect to the size of the withdraw the balancing of the two circuits against each other is complicated by the fact that it sometimes may happen that the withdraw becomes very small or even negative, i.e. that the motor car is accompanied with more water driving in into the wash plant than when leaving it. Normally car wash is a "fine weather activity". However, after long periods of rain and snow the need for cleaning may be so large that the wash cannot be postponed. For many vehicles regular wash is requested irrespective of weather.

An important part in a plant without bleeding-off is a balancing system. According to the present invention a balancing circuit is used. Several alternatives for the design of such a circuit exists depending on which demands besides the balancing one wants to make. A few preferred varieties are described below.

Water losses by withdraw and in sludge must be compensated, but the added water does not need to be of fresh water quality. Collected rainwater is quite useful and also other water, which may be available. Even brackish water and salt water can be used if the system is suitably designed.

The present invention refers to a process and a plant for washing and rinsing of solid objects, specially vehicles and especially passenger cars, in a recycling system without waste water discharges, with wash water and rinse water recycled and purified in separate circuits. Water losses, due to withdraw, in the wash water circuit are compensated by transferring water from the rinse water circuit to the wash water circuit, preferably done by a pre-rinse. The cleaning procedure is ended with a separate final rinsing, starting with recycled rinse water and followed by one or more rinsings comprising pure water, which may contain rinsing agents, and is drained to the recycling system for rinsing water. The pure water used for the final rinsings is supplied from a rinse water supply system and consists partly of recovered wash water, purified by distillation to reduce salt accumulation in the wash water.

Even if methods and equipment according to the invention primarily are intended for eliminating all discharges to water from plants for vehicle washes, of course, they may be used in other wash situations concerning solid objects, where it is desirable to avoid discharges or where one needs salt-free water, for instance, when fresh water of suitable quality for rinsing is lacking.

In one preferred embodiment of the invention a slightly modified conventional oil separator is used as combined water source for the wash circuit and sewage sump for the whole system. The sludge collects little by little in the lower part of the oil separator. When the sludge layer approaches the upper border of the partition dividing the separator proper from the recycling chamber, the separator is emptied by sludge sucking. At completing of existing plants that have oil separators to systems without discharges, this is usually the best design.

However, it should be noted that a system without discharge can be designed with more freedom than the case is if one has to calculate with discharges to the sewage system. The discharge regulations given by the authorities do not apply here. This implies good opportunities for simplified systems. For instance one may over-dimension the wash-gutter to eliminate the need for a separate oil/sludge separator. This gives ample opportunities for using the space below the wash room.

For new plants systems that, more or less continuously, separate and de-water sludge may be preferable. Such a system eliminates the start-up problem and the shock load with respect to water and chemicals associated with the start of the system after sludge sucking. Techniques for continuous sludge separation and dewatering are known. An example is the hydro-cyclones mentioned in the American and the British patent described.

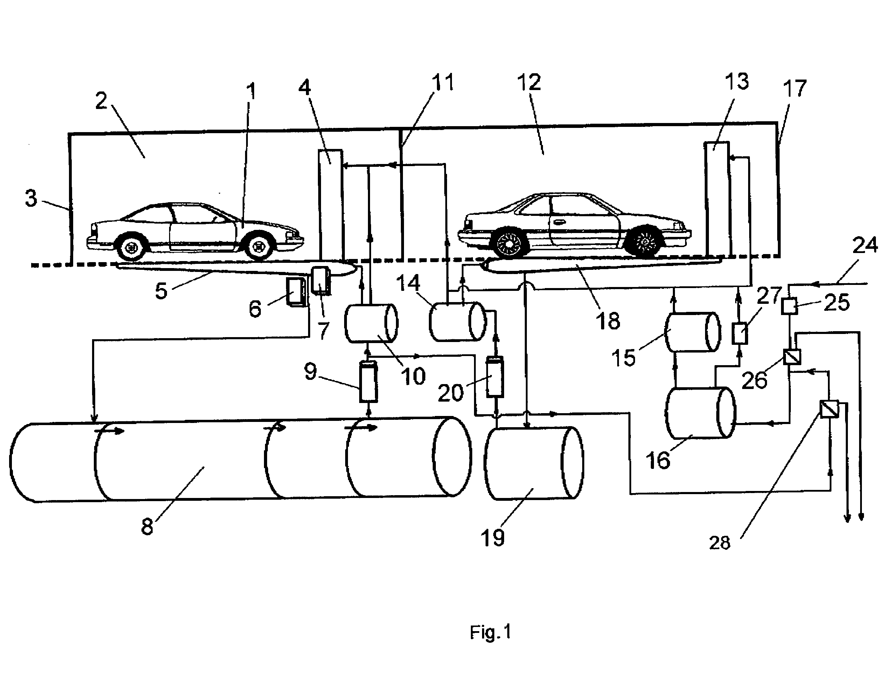

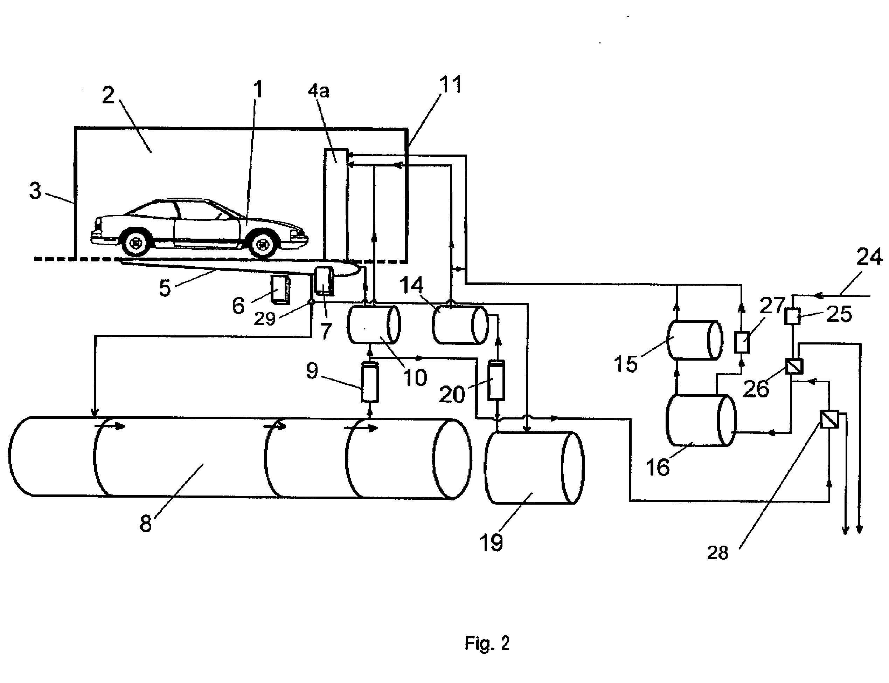

Accompanying figures 1 and 2 show sketches referring to two, different, preferred embodiments of the invention. The units in the sketches are defined in the following function description.

According to figure 1 the process follows the following scheme. A vehicle (1), intended to be washed, is driven in into the wash room (2) through the entrance gate (3) and stops, when the signal at the rack (4) shows red. When the vehicle has stopped, the rack moves over the vehicle. The rack serves as support for a system for applying a defatting agent, a high-pressure system with contour-following arms and a brush system. When a complete wash program has been ordered, the rack moves itself three to five times over the vehicle. At the first passage a special defatting agent is applied at the surfaces that are normally subjected to fouling by asphalt-splashing, only, i.e. the lower part of the car body up to a height between 50 and 70 centimetres from the ground level. At the next passage a defatting agent may be applied to the car body. This operation is needed wintertime only. At the next passage high pressure is used for removing coarse dirt that might scratch the finish using brushes. At the third or fourth passage depending upon time of the year very soft brushes are used.

In parallel with the wash passages high-pressure guns placed under the vehicle wash the chassis. The fourth (fifth) passage is a pre-rinse. This may be deleted if no water addition to the wash system is needed. This may be the case if the vehicles are rain-wet or are carrying substantial amounts of snow. However, usually water additions are required, especially if, as described below, the balancing circuit starting from the wash circuit includes distillation.

The contaminated wash water is collected in the wash-gutter (5). Simultaneously may, if judged appropriate, precipitation agents be added from the devices (6) and (7). Wash water and precipitation agents flow forward to the sludge separator (8), which may be situated underground. At the far end of the sludge separator, counted from the inlet, water purified by sedimentation in the sludge separator is pumped to a sand-filter (9) and is after that directed to the buffer-tank (10). The buffer-tank serves as a sump for the pumps providing the wash rack (4) with wash water. It is preferred to direct a small flow from the buffer-tank back to the wash-gutter (5) to cause a permanent circulation of water through the system. In this way formation of hydrogen sulphide and other evil smelling substances is prevented. It is also preferred that the water in the buffer-tank and in the last section of the sludge separator is aerated, i.e. is agitated by letting air bubble through. If needed, cleaning agents are added to compensate for the loss at the purification in or after the buffer-tank (10)

When the wash phase is ended, i.e. when the rack (4) has completed its three to five rounds over the vehicle it stops and the gate (11) is opened. The vehicle is started and driven into the rinsing/drying room (12) and stopped, when the signal at the rack (13) shows red. The rack (13) supports systems for application of sheeting agent and rinse water and dry blowing of the vehicle. At the first passage of the rack a first rinsing with already used rinse water from the buffer-tank (14) is made. At the second passage one rinses with water from the pump sump (15). This water has been pre-treated by RO-filtration and/or distillation and contains agents for obtaining improved sheeting and lustre. At the third passage one rinses with RO-treated and/or distilled water, with or without additives, from the buffer-tank (16). The third passage may be omitted if the result after two rinses is judged to be satisfactory. Finally water is blown off from the vehicle, which after that deserts the wash via the exit gate (17).

Rinse water is collected in the gutter (18) and flows from there to the collecting tank (19). From the collecting tank water is pumped through the sand-filter (20) to the buffer-tank (14) and from there to a pre-rinse via the wash rack (4) and a first rinse in the rinsing/drying room via the rinsing rack (13). It is preferred to let a small flow go back to the gutter (18) to avoid stagnant water in the gutter causing hydrogen sulphide formation by anaerobe decomposition.

Figure 1 shows that the partial current belonging to the balancing circuit is taken from the buffer-tank for wash-water (10) and is led to a distiller (28). With great advantage one may use a vacuum distiller working at comparatively low temperature and including energy recovery. The reject from the distiller should be taken care of separately to obtain earlier mentioned advantages of elimination of water-soluble impurities. This system provides for all demands that may be put on a well-designed balancing circuit. Therefor it is strongly preferred.

Figure 2 shows a purification system identical to the one of figure 1. The separate rinsing/drying unit (12) with the rinsing/drying rack (13) has been deleted and replaced by completing the wash rack (4) with the functions that, according to figure 1, belong to the drying rack (13). This new rack is designated (4a). Further an arrangement (29) has been added for diverting water from the wash-gutter (5) to either the sludge/oil-separator (8) or a corresponding separator for rinse water (19). No high sealing demands are put on this arrangement. It may therefor be very simple and may be designed so that its function is not disturbed by the fact that it has to work with dirty water.

The modifications are reflected in the wash routine. It is identical to the routines according to figure 1 up to the sentence: "When the wash phase is ended, i.e. when the rack (4) has completed its three to five rounds over the vehicle, it stops...." Instead of moving the vehicle to the rinsing/drying room (12) it is left where it is, while the diverting conduit from the wash-gutter is shifted over to the rinsing position. Here the combined washing/rinsing/drying rack (4a) carries systems for application of sheeting agents and rinse water and dry-blowing the vehicle, beside the wash system. At the rack's first passage, after the shifting-over, a first rinse is made with already used rinse water from the buffer-tank (14). At the second passage rinsing is done with water from the pump sump (15). This water has been pre-treated with RO-filtration and/or distillation and has got additions of lustre and sheeting agents. At the third passage one rinses with RO-treated and/or distilled water, with or without additives, from the buffer-tank (16). The third passage is optional and may be deleted if the result after two rinses is judged satisfactory. After that the routines are identical again.

Normally the vehicles leave the wash wetter than when they were driven in. Inter alia, air in doors and open spaces in the beams of the framework, giving the vehicle stability, has been partly replaced by water. Further water is lost by evaporation and formation of air carried water fog. To compensate for this, water must be added. This may be done from the tap water system or another suitable source. In the examples according to the sketches tap water is added through the pipe (24), softened in a softening filter (25) and after that RO-treated in an RO-filter (26). The accept from the RO-filter is led to the buffer-tank (16). The reject contains just salts that can be found in tap water, already, and may without hesitations be directed to the sewage system. It may also be used for instance for preparing one kind of precipitating chemicals. The production of RO-treated water in the filter (26) is adjusted to the need for water to keep the water level in the system constant. In the alternatives with a distiller no pre-treatment is required, if available water is soft. Beside the mentioned units the rinsing system includes a water heater (27).

In the sketches in the figures 1 and 2, the balancing circuit starts from the inlet to the buffer-tank (10). One advantage with using a distiller is that it cannot be poisoned by fouling and inactivation, which may happen for ultra and RO-fliters, The distiller (28) can work with the very dirty water in the wash circuit. This gives conclusive result with respect to retardation of salt accumulation. Further distillation can give a reject with high dry matter content, which may even be used as fuel at destruction of other environmentally dangerous wastes. Thus no large problems exists for taking care of this reject separately, i.e. without leading it to the oil separator.

A balancing circuit including distillation will act as a "kidney" preventing salt accumulation after long service. As mentioned salt accumulation often requires total emptying of the oil separator before its capacity for sludge collecting is completely exhausted. A disadvantage with a distiller compared to other purifying methods as ultra and/or RO-filtration may be a slightly larger space requirement and higher energy costs for the running. Beside the principle of one single type of waste is broken. If the sludge is de-watered in place continuously or intermittently the need becomes larger for distillation for retarding salt accumulation,

The balancing circuit may have comparative low capacity. The requirement for reclaimed water is at the level of 10 to 30 litres per washed vehicle concerning passenger cars. The higher level refers to the system of figure 2. The capacity figures refer to washing of passenger cars. At washes of trucks and tank-cars calculations become different. Probably, in such cases the need for preventing high accumulations of water-soluble impurities in the wash water and the requirement for having pure water for the rinsing of the tanks becomes decisive for the dimensioning. It should be noted that the described wash routines according to figures 1 and 2 implies that one is using the water transfer from the rinse circuit to the wash circuit, needed for preventing a water deficit in the wash circuit, as a pre-rinse before the vehicle leaves the wash zone or the flow from the wash-gutter is shifted-over from the wash position to the rinse position. Other forms for this transfer are of course within the scope of the invention, too, but transfer by pre-rinsing is strongly preferred.

The final rinsing may be done with pure water, but, if the demands are high that the car, even at humid weather, shall be dry and have high lustre at leaving the wash, the final rinsing should be done with rinse agent additions, too. Disregarding if a rinse agent is used or not it is a large advantage if the final rinsing is done with heated water. Heating lowers the surface tension of the water and gives better sheeting. To this should be added that the higher temperature shortens the drying time.

At plants of this kind, recycling dirty water, smelling problems may occur caused by anaerobic conditions, especially if the circulation is allowed to stop for a longer period. To avoid this the plant should be designed so that aeration, i.e. blowing in air under the liquid surface can be done at critical places. Suitable places may be the recovery section in the sludge/oil separator (8), the buffer-tank (10) for wash water, the sludge/oil separator for rinse water (19) and/or the buffer-tank for rinse water (14). Even with such arrangements, problems may arise and it is important to arrange partial streams through storage and buffer-tanks and belonging pipes and filters for wash and rinse water during periods, when the plant is not in operation.

Preferred defatting agents for use at the process of the invention are, inter alia, those described in the Swedish patent 9002608-9 (468855) and PCT/SE91/00524 (WO92/02665), i.e. water and electrolyte containing micro emulsions obtained by the mixing with water of a liquid, self-emulsifying composition, which is water-free or almost water-free and contains one or more nonionic surface-active agents, one or more organic solvents, which mainly are low polar or not polar and one or more surface-active agents with a load-giving function. These surface-active agents are cationic surface-active agents and/or potentially cationic surface-active agents and/or ampholyte or zwitterionic surface-active agents or anionic phosphate esters. Further electrolytes and complexing agents are included in the mixture. An especially preferred complexing agent is NTA. The mixing is done at the user's place to reduce transport volume. pH in the mixture should be between 8 and 12.

As an alternative if the cars have no or just few asphalt-stains compositions according to SE 9003599-9 (500534), PCT/SE91100764 and EP 0557364 may be suitable. These compositions may also be used as shampoo to reinforce the wash-efficiency of the recycling cleaning solution. Such compositions consist of water containing, alkaline mixtures of surface-active agents and electrolytes and are obtained by letting a self-mixing pre-mixture mix itself with water and electrolyte. The pre-mixtures are thinly fluid and water-free or almost water-free and contain one or more nonionic surface-active agents and one or more surface-active agents with load-giving function. If the pre-mixtures do not already contain electrolytes, it is added at the mixing. The load-giving surface-active agents are cationic surface-active agents which at least partly contain hydroxyl and/or ether groups, potentially cationic surface-active agents as ampholyte and/or zwitterionic surface-active agents or anionic phosphate esters. The final mixture contains also one or more complexing agents for polyvalent metal ions. Here too, an especially preferred complexing agent is NTA.

Cationic or potentially cationic load-giving surface-active agents are preferred as they have a favourable effect for reducing metal corrosion. Special purposes may require that other compositions are used, too, but the mentioned ones are preferred.

To improve sedimentation and filtering different precipitating agents may be used. A preferred agent consists of soluble, not complex-forming salts with polyvalent anions. Suitable compositions are described in SE9101290-6 (469060), SE9201428-1 (500177), PCT/SE93/00394 (WO93/22242), SE9401461-0 and PCT/SE95/00477 (WO95/29877). This precipitating agent may be added, for instance, at every wash and causes a better separation of oils and other hydrophobic dirt. This is especially true if the cleaning agent contains cationic surface-active agents with hydrotropic properties.

Agents of this kind have also a favourable influence concerning elimination of hardness formers, preventing of corrosion and stabilising of pH. Even if the demands on total removal of oils, hydrophobic dirt and heavy metals are not equally essential in a system without discharges, addition is recommended even when it from other aspects is judged less important.

When conditions are not too unfavourable, using this first precipitating agent may be sufficient. At heavier contamination, which may occur wintertime, the first agent may be completed with a second, precipitating agent according to the process described in SE9702056-4 (512 118) and PCT/SE98/01027 (WO98/54097).

This process is described as a process for the purifying of an alkaline wastewater containing anionic compounds that may react with calcium and form water-insoluble precipitates. The process comprises the stages: a) adjustment to a suitable pH between 9 and 11, b) addition of a precipitating agent consisting of a water solution, which is formed by dissolving in water of a pulverous mixture of a soluble calcium salt and a cationic polymer with molecular weight in the range 1 to 12 millions in the proportions by weight of 10:1 to 100:1, in such amount that it corresponds to 0,001 to 3 g calcium ion and corresponding amount polymer per litre wastewater, and c) removal of the formed precipitate by use of known technique for the separation of solid and liquid substances.

When it is important to retard salt accumulation, the best alternative may be a combination, where the soluble calcium salt wholly or partly consists of calcium hydroxides.

When the second precipitating agent is used at car washes with recycling wash solution, the precipitating agent should not be added at every wash, but surge-wise after a suitable number of washes. In this way an optimal utilisation of both precipitating agents is obtained. The principles and benefit of the surge-wise dosing are described more in detail in the mentioned patent application.

When both precipitating agents are used, it is very important that the first agent is always present in surplus so that rest amounts, which are not needed for the precipitating, remains in the returned wash solution. If this is not observed grave danger exist that washes with recycling wash water may cause increased corrosion compared with washes without recycling. With surplus of the first precipitating agent the risk for corrosion is reduced very much.

All agents used in the wash part must be composed so that they in co-operation give an alkaline pH. Preferably the pH shall be over 8. A preferred interval is 8,5 to 11,5.

In the rinse circuit pH may with advantage be neutral or even weakly sour. The rinsing should be done by the method and the agents described in SE9704503-3 (SE-A-513 638) and PCT/SE98/02209 (WO99/30606).

It should be observed that the descriptions of wash and cleaning routines above are examples and should not be interpreted as limiting for the invention. For a man of the art it is obvious that the basic theme of the invention allows many variations regarding choice of washing machines, wash and cleaning routines and chemicals used. A far-reaching adaptation to local conditions with regard to water quality etc. is also possible.

## Claims

1. Process for washing and rinsing solid objects, specially vehicles and especially passenger cars, in a recycling system without waste water discharges, with wash water and rinse water recycled and purified in separate circuits, ***characterised in* that** water losses, due to withdraw, in the wash water circuit, which includes a wash rack (4 respectively 4a), a wash gutter (5), a sedimentation tank (8), a filter (9), a buffer tank (10) and corresponding pipes and pumps, are compensated by transferring water from the rinse water circuit, which includes a rinse rack (13 respectively 4a), a rinse gutter (18 or 5), a collecting tank (19), a filter (20) and a buffer tank (14), to the wash water circuit, and that the cleaning procedure is ended with a separate final rinsing, starting with recycled rinse water and followed by one or more rinsings comprising pure water, which may contain rinsing agents, and is drained to the rinse water circuit, at which the pure water is supplied from a rinse water supply system, which comprises a pump sump (15), a buffer-tank (16), a tap water connection (24), a distiller (28) and if needed filters for softening and/or RO-filtration, and partly consists of recovered wash water, purified by distillation in the distiller (28) to reduce salt accumulation in the wash water.

2. The process of claim 1 ***characterised in* that** pH in the wash water is controlled and kept above 8, preferably between 8.5 and 11.5, to prevent corrosion of equipment and washed objects.

3. The process of claim 1 or 2 ***characterised in* that** a precipitation agent, comprising soluble, not complexing, salts with polyvalent anions, is added to the wash water, as means for bettering sedimentation and filtration and preventing corrosion.

4. The process of any of the claims 1 and 3 ***characterised in* that** a composition comprising cationic surface active agents with hydrotropic properties is used as cleaning agent.

5. The process of any of the preceding claims ***characterised in* that** unpleasant smell from the recycling system is avoided by recycling of part streams to wash and rinse gutters and aeration at critical points.

6. Plant for carrying out the process according to any of the preceding claims comprising a wash water circuit and a rinse water circuit both equipped with recycling and purifying units, ***characterised in* that** the wash water circuit comprises a wash rack (4 respectively 4a), a wash gutter (5), a sedimentation tank (8), a filter (9), a buffer tank (10) and corresponding pipes and pumps, and the rinse water circuit comprises a rinse rack (13 respectively 4a), a rinse gutter (18 or 5), a collecting tank (19), a filter (20) and a buffer tank (14), and that the plant has a balancing circuit which takes dirty wash water from the wash water circuit, purifies it by distillation in the distiller (28) and adds the purified water to the water supply system, comprising a pump sump (15), a buffer-tank (16), a tap water connection (24 and if needed filters for softening and/or RO-filtration,.

7. The plant of claim 6 ***characterised in* that** it has separate zones for washing (2) and rinsing/drying (12).

## Patentansprüche

1. Verfahren für das Waschen und Spülen von festen Gegenstände, besonders Fahrzeugen und insbesonders Personenkraftwagen, in einem Wiedergewinnungssystem ohne Abwasserentladungen, wobei das Waschwasser und Spülenwasser wiedergewonnen und in separaten Kreislaufen gereinigt wird, **dadurch gekennzeichnet, dass** die Wasserverlusten, von so genannten Mitzug verursacht, im Waschwasserkreislauf, der ein Waschregal (4 beziehungsweise 4a), eine Waschrinne (5), einen Sedimentierungsbehälter (8), ein Filter (9), einen Pufferbehälter (10) und entsprechende Rohre und Pumpen umfasst, **dadurch** ausgeglichen werden, dass man Wasser vom Spülenwasserkreislauf, der ein Spülregal (13 beziehungsweise 4a), eine Spülrinne (18 oder 5), ein Sammelbehälter (19), ein Filter (20) und ein Pufferbehälter (14) umfasst, zum Waschwasserkreislauf bringt, und dazu, dass das Reinigungsverfahren mit einem separate abschliessenden Spülen beendet wird, das mit wiedergewonnem Spülwasser beginnt und danach gefolgt von einen oder mehreren Spülwasser, die reines Wasser enthalten, und Spülmittel enthalten können, und abgelassen zum Spülenwasserkreislauf wird, wobei das Reinwasser von einem Spülwasserversorgungssystem geliefert wird, das eine Pumpwanne (15), einen Pufferbehälter (16), einen Leitungswasseranschluss (24), einen Destillierapparat (28) und wenn erforderlich Filter für die Wasserenthärtung und/oder RO-Filtration enthält und teilweise aus zurückgewonnenen Waschwasser, gereinigt durch Destillation im Destillierapparat (28) besteht, um Salzansammlung im Waschwasser zu verringern.

2. Das Verfahren des Anspruchs 1, **dadurch gekennzeichnet, dass** das pH im Waschwasser kontrolliert und über 8, vorzugsweise zwischen 8.5 und 11.5 gehalten wird , um Korrosion der Ausrüstung und der gewaschenen Gegenstände zu verhindern.

3. Das Verfahren der Ansprüche 1 oder 2 **dadurch gekennzeichnet, dass** ein Niederschlagmittel dem Waschwasser hinzugefügt wird, das lösliche nicht komplexierende Salze mit vielwertigen Anionen enhält, und als Mittel für das Verbessern von Sedimentbildung und Filtration und das Verhindern von Korrosion dient.

4. Das Verfahren von irgendwelchen der Ansprüche 1 und 3 **dadurch gekennzeichnet, dass** eine komposition die kationische, oberflächenaktive Mittel mit hydrotropic Eigenschaften enthält, als Reinigungsmittel verwendet wird.

5. Das Verfahren von irgendwelchen der vorausgegangenen Ansprüche **dadurch gekennzeichnet, dass** unangenehmer Geruch vom Wiedergewinnungssystem bei Zurückführung von Teilströme zur Wasch- und spülrinnen und Belüftung an kritischen Punkten vermeidet werden.

6. Anlage für die Ausführung des Verfahren von ingendwelchen der vorausgegangenen Ansprüche umfassend ein Waschwasserkreislauf und ein Spülwasserkreislauf beide mit Wiedergewinnungs-und Reinigungseinheiten ausgerüstet, **daduch gekennzeichnet,** dass der Waschwasserkreislauf ein Waschregal (4 beziehungsweise 4a), eine Waschrinne (5), einen Sedimentierungsbehälter (8), ein Filter (9), einen Pufferbehälter (10) und entsprechende Rohre und Pumpen, und der Spülwasserkreislauf ein Spülregal (13 beziehungsweise 4a), eine Spülrinne (18 oder 5), einen Sammelbehälter (19), ein Filter (20) und einen Pufferbehälter (14) umfasst, und dass die Anlage mit eine Balansierungskreislauf ausgerüstet ist, die verungereinigtes Wasser vom Waschwasserkreislauf nimmt, es durch Destillation in der Destillationseinheit (28) reinigt und das gereinigte Wasser zum Wasserversorgungssystem addiert, das eine Pumpwanne (15), einen Pufferbehälter (16), einen Wasserleitungsanschluss (24) und falls nötig Filter für Wasserenthärtung und/oder RO-filtration umfasst.

7. Die Anlage des Anspruchs 6 **dadurch gekennzeichnet, dass** sie separate Zonen für Reinigung (2) und Spülen/Trocknung ((12) hat.

## Revendications

1. Procédé pour laver et rincer les objets solides, particulièrement véhicules et surtout voitures, dans un système de récuperation sans décharges des eaux usées résiduaires, avec l'eau de lavage et l'eau de rinçage réutilisées et épurées dans des circuits séparés, **caractérisés en ce, que** des pertes d'eau, causées par soi-disant cotirage, dans le circuit d'eau de lavage, qui inclut un support de lavage (4 respectivement 4a), une gouttière de lavage (5), un réservoir de sédimentation (8), un filtre (9), un réservoir de tampon (10) et les pipes et les pompes correspondantes, sont compensés en transférant l'eau à partir du circuit de l'eau de rinçage, qui inclut un support de rinçage (13 respectivement 4a), une gouttière de rinçage (18 ou 5), un récipient collecteur (19), un filtre (20) et un réservoir de tampon (14), au circuit d'eau de lavage, et n ce que le procédé de nettoyage est fini avec un rinçage final séparé, commençant par l'eau réutilisée de rinçage et suivi d'un ou plusieurs liquides de rinçage comportant l'eau pure, qui peut contenir des agents de rinçage, et est vidangé au circuit de l'eau de rinçage, auquel l'eau pure est fournie à partir d'un système d'approvisionnement en eau de rinçage, qui comporte un réservoir de pompage (15), un réservoir de tampon (16), un raccordement d'eau du robinet (24), un distillateur (28) et si nécessaires les filtres pour l'adoucissement et/ou la RO-filtration, et se compose en partie d'eau de lavage récupérée et épurée par distillation dans le distillateur (28) pour réduire l'accumulation de sel dans l'eau de lavage.

2. Le procédé de la revendication 1 **caractérisée en ce, que** le pH d'eau de lavage est contrôlé et gardé au-dessus de 8, de préférence entre 8.5 et 11.5, pour empêcher la corrosion de l'équipement et des objets lavés.

3. Le procédé de la revendication 1 ou 2 **caractérisée en ce, qu'**un agent de précipitation, comportant des sels soluble et non complexant avec des anions polyvalents, est ajouté à l'eau de lavage, en tant comme moyens d'améliorer la sédimentation et filtration et empêcher la corrosion.

4. Le procédé selon quelqu'unes des revendications 1 à 3 **caractérisés en ce, qu'**une composition comportant les agents tensio-actifs cationiques avec les propriétés hydrotropiques est employé comme produit de nettoyage.

5. Le procédé selon quelqu'unes des revendications précédentes **caractérisée en ce, que** des odeurs désagréable du système de récuperation est évité par l'utilisation des courants de retour partiells aux gouttières de lavage et de rinçage et l'aération aux points critiques.

6. Aménagement pour excercer le procédé selon quelqu'unes des revendications précédentes des comportant un circuit d'eau de lavage et un circuit d'eau de rinçage tous deux équipé des unités de la récuperation et d'épuration, **caractérisées en ce, que** le circuit d'eau de lavage comportent un support de lavage (4 respectivement 4a), une gouttière de lavage (5), un réservoir de sédimentation (8), un filtre (9), un réservoir de tampon (10) et les pipes et les pompes correspondantes , et le circuit de l'eau de rinçage comporte un support de rinçage (13 respectivement 4a), une gouttière de rinçage (18 ou 5), un récipient collecteur (19), un filtre (20) et un réservoir de tampon (14), et que l'usine a un circuit de équilibrage qui prend l'eau de lavage sale du circuit d'eau de lavage, l'épure par distillation dans le distillateur (28) et ajoute l'eau épurée au système d'approvisionnement en eau, comportant un réservoir de pompage (15), un amortisseur-réservoir (16), un raccordement d'eau du robinet (24) et si nécessaires les filtres pour l'adoucissement et/ou la RO-filtration.

7. L'aménagement de la revendication 6 **caractérisée en ce, qu'**elle a des zones séparées pour le lavage (2) et rinçage/séchage (12).
